# EUROPÄISCHE PATENTSCHRIFT

(11) **EP 1 713 381 B1**
(45) Veröffentlichungstag und Bekanntmachung des Hinweises auf die Patenterteilung: **30.04.2014**
(21) Anmeldenummer: 04803532.3
(22) Anmeldetag: 04.12.2004
(51) Int. Cl.: A61B 5/00, G08B 21/00, B60N 2/00

(54) **BETRIEBSVERFAHREN FÜR FAHRZEUGE**
OPERATING METHOD FOR VEHICLES
PROCEDE DE FONCTIONNEMENT POUR VEHICULES

(30) Priorität: 12.02.2004 DE 102004006910
(43) Veröffentlichungstag der Anmeldung: 25.10.2006
(73) Patentinhaber: Bayerische Motoren Werke Aktiengesellschaft, 80809 München (DE)
(72) Erfinder: BORKE, Danny, 80935 München (DE); FUCHS, Mximilian, 81247 München (DE); POLLEHN, Dietger, 81927 München (DE)
(86) Internationale Anmeldenummer: PCT/EP2004/013822
(87) Internationale Veröffentlichungsnummer: WO 2005/082232

(56) Entgegenhaltungen:
- WO-A-03/039914
- US-A1- 2002 140 215

## Beschreibung

Die Erfindung bezieht sich auf ein Betriebsverfahren für Fahrzeuge, bei dem mittels einer vorzugsweise berührungslosen Sensorik der Gesundheitszustand des Fahrers ermittelt und ein entsprechendes Signal ausgegeben wird.

Ein derartiges Verfahren ist aus der US 2002/0121981 A1 bekannt. Es werden dabei sowohl Grundinformationen über den Gesundheitszustand wie Körpertemperatur und Ruhepuls als auch vorübergehende Informationen wie Pulserhöhungen und Lidschlagfrequenz gewonnen. Letzteres lässt Rückschlüsse auf die Müdigkeit des Fahrzeugbenutzers zu. Diese Informationen werden nach draußen zu einem externen Gutachter übertragen, der seinerseits z. B. den Fahrer darauf aufmerksam machen soll, sein Fahrverhalten zu ändern. Auch ist es möglich, den Fahrer durch eine im Fahrzeug selbst vorgesehene Auswerteelektronik auf einen kritischen Gesundheitszustand hinzuweisen.

In diesem Zusammenhang ebenfalls von Bedeutung ist das aus der EP 0 878 356 B bekannte Verfahren, bei einem schweren Unfall passive Sicherheitseinrichtungen wie Airbags und dgl. entsprechend der körperlichen Fitness des Fahrgastes zu steuern.

Die nicht vorveröffentlichte DE 103 07 556.9 beschäftigt sich mit dem Problem, im Falle eines Unfalls den Gesundheitszustand des Fahrgastes zu analysieren und soweit möglich positiv einzuwirken bzw. eine weitere Schädigung, die andernfalls beispielsweise durch einen Temperaturanstieg im Fahrgastraum hervorgerufen würde, zu verhindern, indem beispielsweise die Heizanlage abgeschaltet wird.

Allen diesen Verfahren gemeinsam ist die Zielrichtung, eine eingetretene Schadenssituation nicht noch mehr zu verschlechtern bzw. den Eintritt eines Schadens zu verhindern. Sie sind eindeutig auf einen defizitären Gesundheitszustand der Fahrzeuginsassen ausgerichtet.

Schließlich ist es aus der US 2002/140215 A bekannt, die Ist-Temperatur eines Fahrgastes zu bestimmen und die Klimaanlage so zu steuern, dass diese Temperatur einer für alle Fahrgäste geltenden oder für jeden Fahrgast individuellen Soll-Temperatur entspricht. Diese Soll-Temperatur ist mittels eines Stellers 250 einstellbar.

Die US 2002/14 0215 A offenbart ebenfalls den sehr allgemeinen Oberbegriff des Anspruchs 1.

Der Erfindung liegt die Aufgabe zugrunde, ein Verfahren der eingangs genannten Art zu schaffen, den Fahrer und die Fahrgäste positiv zu beeinflussen.

Die Erfindung löst diese Aufgabe mit den Mitteln des Patentanspruchs 1.

Mit Hilfe der im einzelnen weiter unten angegebenen Einrichtungen wird der körperliche und geistige Zustand der Fahrzeuginsassen positiv beeinflusst. Es wird dabei versucht, mit Hilfe dieser Einrichtungen den Gesundheitszustand des Fahrgastes und damit indirekt auch den Gemütszustand zu verbessern, oder aber auch das mentale Wohl direkt positiv zu beeinflussen.

Bei diesen Einrichtungen handelt es sich in aller Regel um solche, die ohnehin im Fahrzeug vorhanden sind. Allen Einrichtungen gemeinsam ist, dass sie in ihrer Wirkung auf den Fahrgast gerichtet sind und dessen Gesundheitszustand möglichst positiv beeinflussen. Im Gegensatz zu den eingangs genannten bekannten bzw. älteren Dokumenten bzw. Patentanmeldungen soll aber gerade nicht gewartet werden, bis eine i.d.R. deutliche Verschlechterung des Gesundheitszustands bzw. des Fahrvermögens eingetreten ist. Es soll vielmehr während einer Fahrt ständig eine Verbesserung des körperlichen und mentalen Wohls der Fahrgäste erzielt werden. Auch ist das Verfahren nicht nur auf den Fahrer, sondern auf alle anderen Fahrgäste ausgerichtet.

Im einzelnen handelt es sich bei diesen Einrichtungen um:
a) eine Heiz-/ Klimaanlage zur Temperaturanpassung bzw. -Stabilisierung in der Fahrgastzelle um ein möglichst angenehmes Raumklima für die Fahrgäste zu schaffen
b) ein Innenraumluft - Verbesserungssystem zum Anreichern der Innenraumluft mit das Wohlbefinden steigernden Geruchsstoffen analog einer sog. Aromatherapie und/oder zum Neutralisieren von Gift- oder Schadstoffen
c) eine Sitzmassageeinrichtung, um beispielsweise im Falle einer länger andauernden und in der Regel ermüdenden Fahrt den Fahrgast körperlich zu aktivieren
d) eine Musikanlage, die wohlklingende Tonfolgen wiedergibt, um die Fahrgäste und den Fahrer in eine positive Stimmung zu versetzen,
e) eine Fahrwerkseinstellvorrichtung, mit der das Komfortempfinden der Fahrgäste gesteigert werden kann
f) eine Luftdruckausgleichseinrichtung, um Druckschwankungen, wie sie bei einer Bergfahrt eintreten, entgegenzuwirken, und/oder
g) eine das Wohlbefinden durch wärmendes Rotlicht oder erfrischendes helles Licht steigernde Innenbeleuchtungseinrichtung.

Die Informationen über das Befinden und den Gesundheitszustand der Fahrgäste können indirekt aus der Analyse der Verkehrssituation und des Fahrtverlaufs gewonnen werden. Die dafür notwendige Sensorik ist in der Regel bereits vorhanden und wird dafür eingesetzt, Informationen über die Verkehrssituation, den Straßenzustand und das Verhalten des Fahrzeugs an andere Verkehrsteilnehmer oder eine Zentrale weiterzugeben. Bei der Anmelderin werden derartige Untersuchungen unter der Bezeichnung "Connected Drive" durchgeführt.

Im Rahmen der Erfindung werden die vorliegenden Informationen verwendet, um Rückschlüsse auf die körperliche und mentale Belastung der Fahrgäste zu gewinnen. Ergibt sich beispielsweise aus den Daten, dass das Fahrzeug bei großer Verkehrsdichte und kritischem Fahrbahnzustand mit nicht geringer Geschwindigkeit bewegt wird oder dass bei hoher Fahrzeuggeschwindigkeit nachkommende Fahrzeuge dicht auffahren, liegt der Schluss einer besonderen Stresssituation nahe.

Ergänzend oder alternativ können auch mittels eines Mikrofons der außerhalb des Fahrzeugs herrschende Geräuschpegel und/oder aber das akustische Verhalten der Fahrgäste und des Fahrers selbst aufgenommen und analysiert werden. Aus außen hörbaren Hupgeräuschen oder lautstark geführten Unterhaltungen wird auf besondere psychische Belastungen der Fahrzeuginsassen geschlossen.

Die Informationen über den Gesundheitszustand der Fahrgäste können - vorzugsweise berührungslos - auch vom jeweiligen Fahrgast selbst gewonnen werden. Daraus lässt sich direkt der jeweilige Grad an Behaglichkeit ableiten, den der Fahrgast empfindet. Hierzu kann es vorteilhaft sein, den Gesundheitszustand des Fahrgastes während einer Fahrt und insbesondere auf den Beginn der Fahrt bezogen zu bestimmen. Ist der Fahrgast unverändert aufmerksam und zeigt keinerlei Anzeichen von Müdigkeit oder sonstige gesundheitliche Auffälligkeit wie eine hohe Körpertemperatur, liegt die Annahme einer guten Gesundheit und eines persönlichen Wohlgefühls nahe.

Zeigt der Fahrgast hingegen zunehmende Zeichen von Hektik in seinen Bewegungen, beim Fahrer beispielsweise bei seinem Lenkverhalten, oder aber Zeichen von Müdigkeit, beim Fahrer in Form von verlangsamten Reaktionen oder einer größeren Lidschlagfrequenz, ist davon auszugehen, dass auch das Wohlbefinden nachgelassen hat. Dann ist es sinnvoll, die genannten Einrichtungen teilweise oder zusammen einzusetzen, um das Wohlbefinden wieder anzuheben.

Auch atmosphärische Einflüsse, beispielsweise ein aufziehendes Gewitter, können mittels einer geeigneten Fahrzeug-Sensorik, beispielsweise einem Barometer, oder per Datenübertragung eines Wetterdienstes oder anderer Fahrzeuge erfasst werden und ihr Einfluss auf den Gesundheitszustand der Fahrzeuginsassen durch eine entsprechende Reaktion fahrzeugeigener Einrichtungen, wie einer Audioanlage zur Erzeugung einer Beruhigungsmusik Berücksichtigung finden.

Besonders vorteilhaft kann es sein, für jeden Fahrgast ein Gesundheits- und Verhaltensprofil vorzuhalten, das für das jeweilige subjektive Wohlbefinden charakteristisch ist. Diese Profile können beispielsweise an Hand von mehreren Fahrten in der Vergangenheit gewonnen werden. Voraussetzung dafür ist eine eindeutige Identifizierung des Fahrgastes und Zuordnung seiner Verhaltenscharakteristiken. Diese Identifizierung erfolgt wie bekannt optisch mittels Bildverarbeitungstechniken, oder mittels biometrischer Informationen wie Fingerabdruck, Stimmcharakteristik und Retinastruktur, die mit einer geeigneten Bio-Sensorik bestimmt werden.

In diesem Zusammenhang kann es vorteilhaft sein, das Gesundheits- und Verhaltensprofil für den jeweiligen Nutzer über ein geeignetes Konfigurationstool auch manuell parametrierbar zu machen. So sollten z.B. die eingangs genannten Einrichtungen von jedem einzelnen sperrbar oder in Ihrem Wirkungsumfang einschränkbar sein, um diese der individuellen Physiologie des Nutzers anpassen zu können. Soweit es mit den Bedürfnissen und Anforderungen der anderen Fahrzeugnutzer verträglich ist, sollen die genannten Einrichtungen individuell konfigurierbar sein und eine individuelle Konfiguration jederzeit veränderbar sein. Auf diese Weise wird der Fahrzeugbenutzer bei der Fahrt entlastet und ein wesentlicher Beitrag zur Erhöhung der Verkehrssicherheit geleistet.

## Patentansprüche

1. Betriebsverfahren für Fahrzeuge, bei dem der Gesundheitszustand des Fahrers und der übrigen Fahrgäste ermittelt und ein entsprechendes Signal ausgegeben wird, **gekennzeichnet dadurch dass** ständig aktivierbare Einrichtungen im Fahrzeug, vorgesehen sind, mittels derer der Gesundheitszustand des Fahrers und der übrigen Fahrgäste während einer Fahrt positiv beeinflusst und/oder einer auftretenden Belastung entgegengewirkt wird, und dass der Umfang und/oder die Art der Aktivierung der Einrichtungen durch den jeweiligen Fahrzeugnutzer individuell eingestellt werden.

2. Verfahren nach Anspruch 1, **dadurch gekennzeichnet, dass** die individuelle Konfiguration der Einrichtungen jederzeit veränderbar ist.

3. Verfahren nach Anspruch 1 oder 2, **dadurch gekennzeichnet, dass** der Gesundheitszustand des Fahrers und der übrigen Fahrgäste berührungslos ermittelt wird.

4. Verfahren nach Anspruch 3, **dadurch gekennzeichnet, dass** der tatsächliche körperliche Zustand des Fahrers und der übrigen Fahrgäste mittels einer Bio-Sensorik bestimmt wird.

5. Verfahren nach einem der Ansprüche 1 bis 4, **dadurch gekennzeichnet, dass** der tatsächliche körperliche Zustand des Fahrers und der übrigen Fahrgäste aus dem Fahrtverlauf und oder der aktuellen und/oder vorangehenden Verkehrssituation abgeleitet wird.

6. Verfahren nach einem der Ansprüche 1 bis 5, **dadurch gekennzeichnet, dass** der tatsächliche körperliche Zustand des Fahrers und der übrigen Fahrgäste aus deren akustischem Verhalten abgeleitet wird.

## Claims

1. An operating method for vehicles, wherein the state of health of the driver and the other passengers is determined and a corresponding signal is emitted, **characterised in that** constantly activatable devices are provided in the vehicle, by means of which the state of health of the driver and the other passengers is positively influenced during a journey and/or an occurring stress is counteracted, and **in that** the extent and/or type of activation of the devices is individually adjusted by the respective vehicle user.

2. A method according to claim 1, **characterised in that** the individual configuration of the devices can be changed at any time.

3. A method according to claim 1 or 2, **characterised in that** the state of health of the driver and the other passengers is determined contactlessly.

4. A method according to claim 3, **characterised in that** the actual physical state of the driver and the other passengers is determined by means of a bio-sensor system.

5. A method according to any one of claims 1 to 4, **characterised in that** the actual physical state of the driver and the other passengers is derived from the course of the journey and/or the current and/or previous traffic situation.

6. A method according to any one of claims 1 to 5, **characterised in that** the actual physical state of the driver and the other passengers is derived from their acoustic behaviour.

## Revendications

1. Procédé de fonctionnement de véhicules selon lequel l'état de santé du conducteur et des autres passagers est déterminé et un signal correspondant est émis,
**caractérisé en ce qu'**
il est prévu dans le véhicule des dispositifs activables en permanence au moyen desquels l'état de santé du conducteur et des autres passagers peut être influencé favorablement pendant un trajet et/ou un stress apparaissant peut être contrecarré, et l'étendue et/ou le type d'activation des dispositifs est réglé individuellement par chacun des utilisateurs du véhicule.

2. Procédé conforme à la revendication 1,
**caractérisé en ce que**
la configuration individuelle des dispositifs est modifiable en permanence.

3. Procédé conforme à la revendication 1 ou 2,
**caractérisé en ce que**
l'état de santé du conducteur et des autres passagers est déterminée sans contact.

4. Procédé conforme à la revendication 3,
**caractérisé en ce que**
l'état corporel du conducteur et des autres passagers est déterminé à l'aide de capteurs biologiques.

5. Procédé conforme à l'une des revendications 1 à 4,
**caractérisé en ce que**
l'état corporel effectif du conducteur et des autres passagers est déduit du déroulement du trajet et/ou de la situation de trafic actuelle ou précédente.

6. Procédé conforme à l'une des revendications 1 à 5,
**caractérisé en ce que**
l'état corporel effectif du conducteur et des autres passagers est déduit de leur comportement acoustique.
